# EUROPEAN PATENT SPECIFICATION

(11) **EP 2 876 460 B1**
(45) Date of publication and mention of the grant of the patent: **15.05.2019**
(21) Application number: 13194451.4
(22) Date of filing: 26.11.2013
(51) Int. Cl.: G01S 13/58, G01S 13/93, G01S 13/34, G01S 13/90

(54) **A vehicle radar with two transmitter antenna arrangements**
Fahrzeugradar mit zwei Senderantennenanordnungen
Radar de véhicule avec deux agencements d'antenne d'émetteur

(43) Date of publication of application: 27.05.2015
(73) Proprietor: Veoneer Sweden AB, 447 83 Vårgårda (SE)
(72) Inventor: Moss, Jonathan, Reading, RG7 6PH (GB); Jenkins, Alan, 85391 Allerhausen (DE); Goelz, Hansjerg, 88205 Gilching (DE); Schwertz, Christian, 97437 Hassfurt (DE)
(74) Representative: Sandstedt, Jonas Sven James

(56) References cited:
- EP-A2- 2 045 612
- JP-A- 2003 110 335
- US-A1- 2006 066 474

## Description

### DESCRIPTION OF THE INVENTION

The present invention relates to a vehicle radar system comprising transmitting means arranged for generating sweep signals. Each sweep signal is in the form of an FMCW (Frequency Modulated Continuous Wave) chirp signal. A first transmitter antenna arrangement is arranged to transmit a first chirp signal and a second transmitter antenna arrangement is arranged to transmit a second chirp signal. The radar system further comprises receiving means, an Analog to Digital Converter (ADC) arrangement and a Digital Signal Processor (DSP) arrangement, where the receiving means is arranged to receive reflected signals and to mix the received reflected signals with at least one chirp signal. The ADC arrangement is arranged to convert the mixed received signals to digital signals which are arranged to be input into DSP arrangement.

The present invention also relates to a method for a vehicle radar system, where the method comprises the steps:
generating sweep signals in the form of FMCW (Frequency Modulated Continuous Wave) chirp signals;
transmitting a first chirp signal using a first transmitter antenna arrangement;
transmitting a second chirp signal using a second transmitter antenna arrangement
receiving reflected signals;
mixing the received reflected signals with at least one chirp signal; and
converting the mixed received signals to a digital signal.

Today, one or more radar systems are often used in vehicles in order to detect obstacles in the surroundings. Such a radar system is usually arranged to distinguish or resolve single targets from the surroundings by using a Doppler effect in a previously well-known manner.

A radar system comprises means for generating so-called chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. The change in frequency from start to finish may for example be of the order of 1% of the starting frequency.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors (DSP:s) by means of Fast Fourier Transform (FFT) processing.

Such a radar system may be in the form of a multiple-input multiple-output (MIMO) radar as disclosed in the document US 2011140949 which describes a MIMO radar where a transmitter transmits FMCW signals and a receiver receives echo signals which are mixed with the transmitted signal. The mixed signal is then converted into a digital signal.

A radar according to the above comprises MMIC:s (Monolithic Microwave Integrated Circuits) which generally are split in function between the chirp signal generator and the receiver that mixes the received signal as described above.

There is a desire to achieve improved angular accuracy and resolution. There is also a desire to acquire a more efficient use of the MMIC:s, which are relatively power-consuming.

This can be derived by means of an increased number of receiver channels. This requires additional receiver channel, which corresponds to more MMIC:s and ADC channels. Another approach is to use more than one transmitting antenna and divide the transmitted chirp signal between these antennas. However, this has the drawback that the sampling rate of the channel, and hence the unambiguous Doppler velocity, is reduced. It also means that the transmit antennas are not used simultaneously which is a waste of available capacity, also results in different views of the surroundings due to the movement of the radar system if mounted in a moving vehicle.

EP 2045612 discloses using BPSK (Binary Phase-Shift Keying) with different codes for modulation of the chirp signals for the different transmitting antennas.

The object of the present invention is to provide a vehicle radar system which is arranged for improved angular accuracy and resolution, and for a more efficient use of the MMIC:s.

This object is obtained by means of a vehicle radar system comprising transmitting means arranged for generating sweep signals. Each sweep signal is in the form of an FMCW (Frequency Modulated Continuous Wave) chirp signal. A first transmitter antenna arrangement is arranged to transmit a first chirp signal and a second transmitter antenna arrangement is arranged to transmit a second chirp signal. The radar system further comprises receiving means, an Analog to Digital Converter (ADC) arrangement and a Digital Signal Processor (DSP) arrangement, where the receiving means is arranged to receive reflected signals and to mix the received reflected signals with at least one chirp signal. The ADC arrangement is arranged to convert the mixed received signals to digital signals, which digital signals are arranged to be input into DSP arrangement. The radar system further comprises a signal modulator arranged to modulate the second chirp signal by applying a phase shift to every ramp, every second ramp or every third chirp ramp of the second chirp signal, or in a pseudo-random manner from chirp signal ramp to chirp signal ramp of the second chirp signal, where the first chirp signal is constituted by the modulated second chirp signal.

This object is also obtained by means of a method for a vehicle radar system, where the method comprises the steps:
generating sweep signals in the form of FMCW, Frequency Modulated Continuous Wave, chirp signals;
transmitting a first chirp signal using a first transmitter antenna arrangement;
transmitting a second chirp signal using a second transmitter antenna arrangement
receiving reflected signals;
mixing the received reflected signals with at least one chirp signal; and
converting the mixed received signals to a digital signal.

The method further comprises the steps of modulating the second chirp signal by applying a phase shift to every ramp, every second ramp or every third chirp ramp of the second chirp signal, or in a pseudo-random manner from chirp signal ramp to chirp signal ramp of the second chirp signal and using the modulated second chirp signal as the first chirp signal.

According to an example, the signal modulator is arranged to modulate the second chirp signal by applying a phase shift of 180° to every second chirp ramp of the second chirp signal.

According to another example, the radar system comprises a sampling and timing arrangement arranged to produce a sampling and timing signal with a sampling frequency fₛ. The ADC arrangement is further arranged to convert the received signals to a digital signal by means of sampling the mixed signal.

According to another example, the signal modulator is controlled by means of a control signal that is produced from the sampling and timing signal.

Other examples are disclosed in the dependent claims.

A number of advantages are obtained by means of the present invention.

Mainly, a vehicle radar system is disclosed which is arranged to recover the respective chirp signals transmitted from the transmitter antennas independently, and thus create a wide SAR (Synthetic Aperture Radar) aperture simultaneously.

Furthermore, the Doppler Nyquist speed, i.e. the unambiguous target speed, is increased. Also, by simultaneously transmitting power on the transmitter antenna arrangements, the received Signal-to-Noise ratio is increased.

### BRIEF DESCRIPTION OF THE DRAWINGS

The present invention will now be described more in detail with reference to the appended drawings, where:
- Figure 1: shows a schematic side view of a vehicle;
- Figure 2: shows a simplified schematic of a vehicle radar system according to a first example;
- Figure 3a: shows a graphic representation of a second chirp signal;
- Figure 3b: shows a graphic representation of a control signal;
- Figure 4a: shows a graphic representation of target indications in the Doppler domain according to a first example;
- Figure 4b: shows a graphic representation of target indications in the range domain;
- Figure 4c: shows a graphic representation of target indications in the Doppler domain according to a second example;
- Figure 5a: shows a graphic representation of a first chirp signal;
- Figure 5b: shows a graphic representation of a second chirp signal; and
- Figure 6: shows a flowchart for a method according to the present invention.

### DETAILED DESCRIPTION

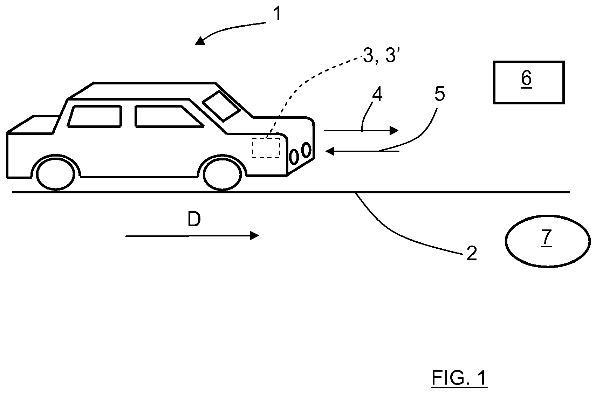

Figure 1 schematically shows a side view of a vehicle 1 arranged to run on a road 2 in a direction D, where the vehicle 1 comprises a vehicle radar system 3 which is arranged to distinguish and/or resolve single targets from the surroundings by transmitting signals 4 and receiving reflected signals 5 and using a Doppler effect in a previously well-known manner. The vehicle radar system 3 is arranged to provide azimuth angles of possible objects 6, 7 by simultaneously sampling and analyzing phase and amplitude of the received signals 5a, 5b.

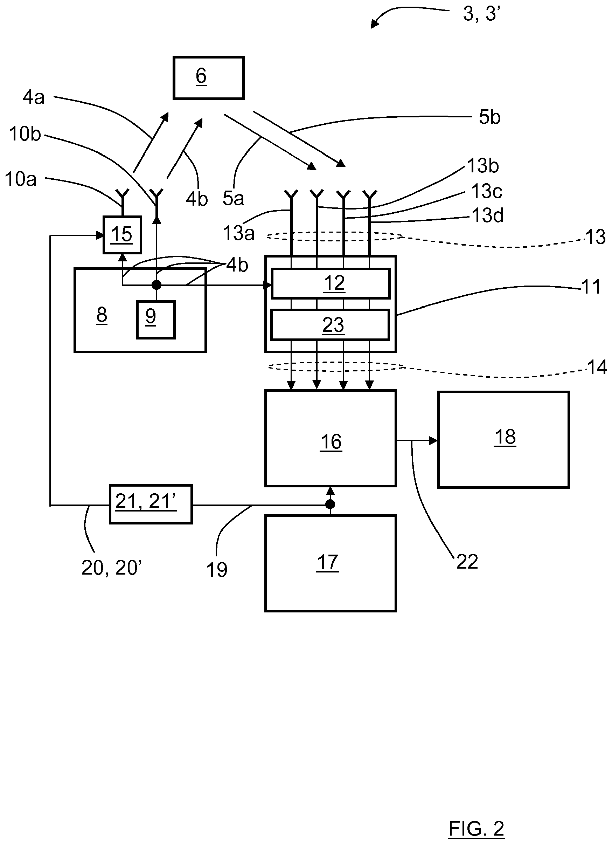

With reference to both Figure 1 and Figure 2, Figure 2 showing a simplified schematic of a vehicle radar system 3 according to a first example, the vehicle radar system 3 comprises a transmitter arrangement 8 which in turn comprises a signal generator 9 that is arranged to generate FMCW (Frequency Modulated Continuous Wave) chirp signals of a previously known kind, a chirp signal being in the form of a continuous sinusoid where the frequency varies from a first low frequency to a second high frequency over the course of the ramp. The change in frequency from start to finish may for example be of the order of 1% of the starting frequency.

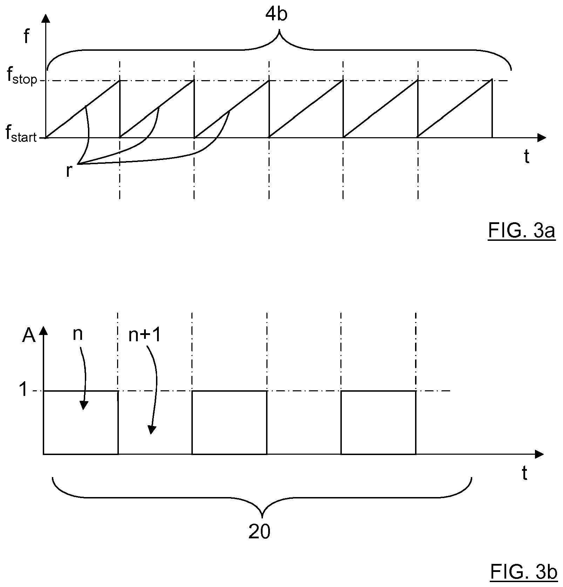

The transmitter arrangement 8 further comprises a first transmitter antenna arrangement 10a and a second transmitter antenna arrangement 10b, each transmitter antenna arrangement 10a, 10b either being constituted by one antenna element or by an array of antenna elements, and being arranged to transmit a corresponding first chirp signal 4a and second chirp signal 4b, the second chirp signal 4b being shown in Figure 3a with frequency on the Y-axis and time on the X-axis. The frequency varies from a first low frequency fₛₜₐᵣₜ to a second high frequency fₛₜₒₚ over the course of each ramp r (only three ramps indicated in Figure 3a for the sake of clarity).

The vehicle radar system 3 further comprises a receiver arrangement 11, which receiver arrangement 11 in turn comprises a receiver mixer 12 and a receiver antenna array 13, where the receiver antenna array 13 comprises four receiver antenna arrangements 13a, 13b, 13c, 13d. In the same way as for the transmitter antenna arrangements, each receiver antenna arrangement 13a, 13b, 13c, 13d may be constituted by one antenna element or by an array of antenna elements.

The transmitted signals 4a, 4b are reflected at a first object 6, and the reflected signals 5a, 5b are received by the receiver arrangement 11 via the receiver antenna arrangements 13a, 13b, 13c, 13d. The received signals 5a, 5b, thus constituted by reflected radar echoes, are mixed with the second chirp signal 4b in the receiver mixer 12, such that four corresponding IF (Intermediate Frequency) signals 14 are acquired. The difference frequency of the resulting IF signals relates to the target distance.

According to the present invention, the vehicle radar system 3 further comprises a signal modulator 15, arranged to modulate the second chirp signal 4b such that the first chirp signal 4a is constituted by a modulated second chirp signal 4b. The first chirp signal 4a, i.e. the modulated second chirp signal 4b, is fed to the first transmitter antenna arrangement 10a where it is transmitted, and the second chirp signal is fed 4b to the second transmitter antenna arrangement 10b where it is transmitted.

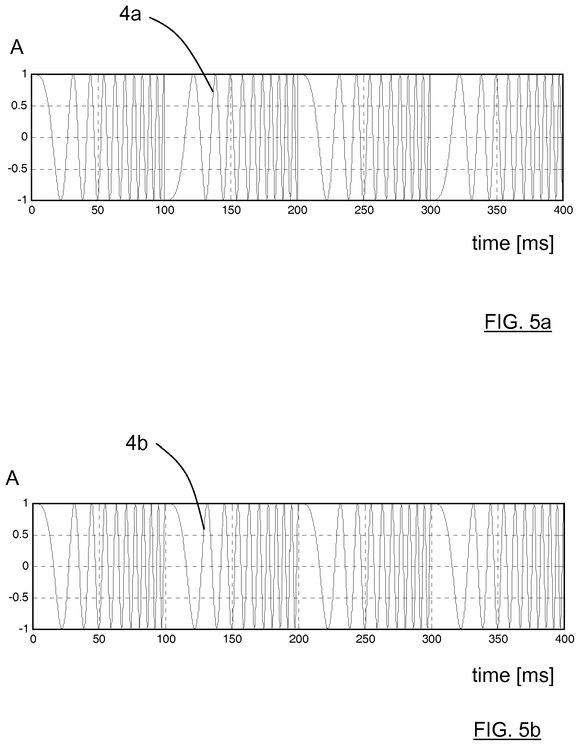

In this example, with reference also to Figure 3a, the modulation is performed such that every second of the second chirp ramp signals 4b is phase shifted 180° such that the first chirp signal 4a is constituted by a second chirp signal 4b where every second chirp ramp is phase shifted 180°. In order to achieve this, the signal modulator 15 is positioned between the signal generator 9 and the first antenna 10a, and is arranged to modulate the second chirp signal 4b such that it becomes the first chirp signal 4a according to the above, before being transmitted by the first antenna arrangement 10a. This is illustrated in Figure 5a and Figure 5b; in Figure 5b the second chirp signal 4b is shown, and in Figure 5a the first chirp signal 4a is shown, and it is evident from Figure 5a that every second chirp ramp is phase shifted 180°, the period time for each chirp ramp being 100ms in the example shown in Figure 5a and figure 5b.

The vehicle radar system 3 further comprises an Analog to Digital Converter (ADC) arrangement 16 and a sampling and timing arrangement 17. The four corresponding IF signals 14 are transmitted from the receiver to the ADC arrangement 16 where the IF signals 14 are sampled at a certain predetermined sampling frequency fₛ and converted to digital signals 22, the sampling frequency fₛ being provided in the form of a sampling and timing signal 19 produced by the sampling and timing arrangement 17.

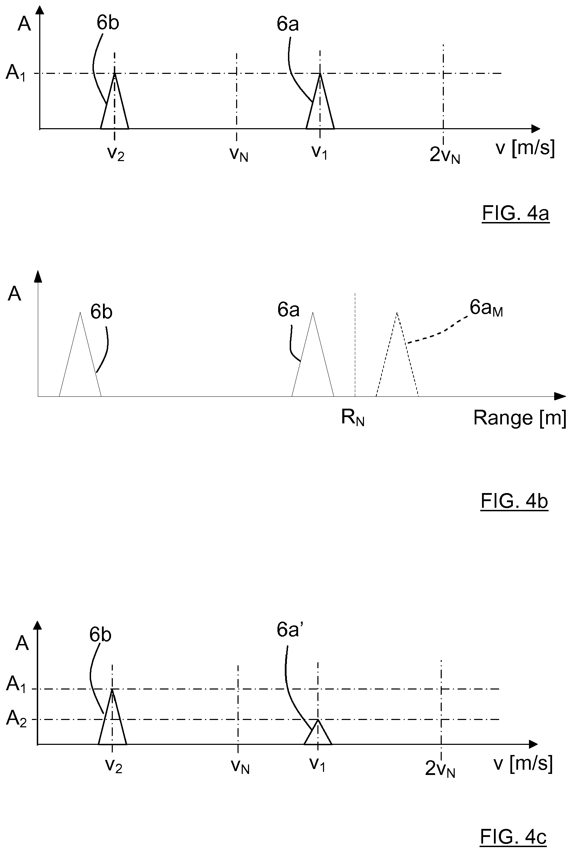

The vehicle radar system 3 further comprises a DSP (Digital Signal Processor) arrangement 18 that is adapted for radar signal processing by means of a first FFT (Fast Fourier Transform) to convert the digital signals 22 to a range domain, and a second FFT to combine the results from successive chirp signal ramps into the Doppler domain, which is indicated in a graph in Figure 4, with relative signal amplitude in dB on the Y-axis and Doppler domain in m/s on the X-axis.

In this example, the sampling frequency fₛ of the sampling and timing signal 19 is 10 MHz. The sampling and timing signal 19 is also used for producing a control signal 20 for the phase modulator. The control signal 20 is produced by having the sampling frequency fₛ of the sampling and timing signal 19 reduced to half its original value by means of a frequency divider 21, such that the control signal 20 for the phase modulator has a control frequency f_{c} of 5 MHz. The control signal 20 is shown in Figure 3b with amplitude on the Y-axis and time on the X-axis.

The control signal 20 is in the form of a binary signal that is fed into the modulator and acts by digitally switching the modulator between a phase shift of 0° or 180°, the switching thus taking place at the control frequency f_{c} of 5 MHz. Hence control signal pulse n could have amplitude value '1' which represents 0° phase shift of the modulator, followed by the next pulse n+1 which has amplitude value 0', resulting in 180° phase shift, and so on.

The received signals from the first transmitter antenna arrangement 10a, being sampled with the sampling and timing signal of 10 MHz, produces target information from 0 to 2.5 MHz, and the received signals from the second transmitter antenna arrangement, being sampled with the sampling and timing signal of 10 MHz, produces target information from 2.5 MHz to 5.0 MHz. This relies on an anti-aliasing filter 23 comprised in the receiver arrangement 11. The anti-aliasing filter 23 has a sufficient degree of suppression beyond the present Nyquist frequency, in this case, with a cut-off of 5MHz. This has the effect of removing one of the two tones from the first chirp signal 4a and allows the ADC to work reliably.

In this example, the first object 6, as indicated in Figure 2, constitutes a detected target. As shown in Figure 4a, said target is indicated twice in the Doppler domain as a first target indication 6a and a second target indication 6b. This is due to the two different chirp signals 4a, 4b that have been transmitted simultaneously from the respective antenna arrangement 10a, 10b, where the first target indication 6a corresponds to the first chirp signal 4a and the second target indication 6b corresponds to the second chirp signal 4b. The first target indication 6a appears at a first speed v₁ in the Doppler domain and the second target indication 6b appears at a second speed v₂ in the Doppler domain. In this example the second speed v₂ is 10 m/s, and the first speed v₁ equals the sum of the second speed v₂ and the Nyquist speed v_{N}; in this example 10 m/s + 25 m/s = 35 m/s. Here, the target indications 6a, 6b are shown having a first amplitude A₁.

In order to explain the Nyquist speed, an example will be provided below. According to the example, a 77GHz wavefront hits an object and is reflected, and the phase of the returned RF signal at each chirp signal is detected. Hence within the time delay between the centre of two adjacent chirp signals, the phase shift of the reflected 77GHz wave should be less than 180°. In this example, at 77GHz, the wavelength is approximately 4mm, and the half wavelength is approximately 2mm. Since the wave travels to the object and back again, a movement by the object of 1 mm will approximately result in a 180° phase shift as detected by the radar.

This means that the Nyquist speed is 1 mm per time delay between adjacent chirp signals. If the chirp signal ramps are repeated every 40 microseconds, then the Nyquist speed is about 25 m/s.

The present invention enables simultaneous transmission via the transmitter antenna arrangements 10a, 10b. If such a simultaneous transmission had not been possible, the sampling rate of the channel, and hence the unambiguous Doppler velocity, would be reduced since the Nyquist speed would be reduced to half its value; to 12,5 m/s.

With reference to Figure 4b, showing how the range domain may appear, different control signal 20 frequencies will be discussed. When the control signal 20 has a relatively high frequency, such that the modulation occurs within a chirp signal ramp, the result is that the two targets 6a, 6b appear in the Range domain and not in the Doppler domain, with a mirrored first target indication 6a_{M} beyond a Nyquist range R_{N}.

When the control signal 20 has a lower frequency, such that is changed only at end of each chirp signal ramp, the two targets 6a, 6b appear in the Doppler domain, as shown in Figure 4a, but only one target in the Range domain.

The Range domain is the result of the first FFT, where targets further away appear at higher frequencies. As a target increases in distance, it will start to alias, and appear as coming closer, which is undesirable.

Generally, as understood from the above, the present invention relates to applying a predetermined pattern of phase shifts and/or amplitude shifts to one of the chirp signals relative the other, making it possible to recover the respective chirp signals transmitted from the transmitter antennas 10a, 10b independently and thus create a wide SAR (Synthetic Aperture Radar) aperture simultaneously.

The phases of the reflected signals 5a, 5b can be extracted for all receiver antenna arrangements, allowing an enhanced estimation of direction of arrival (DOA).

Should the target speed increase such that the second target indication 6b appears at or over the Nyquist speed v_{N}, the first target indication 6a will appear at a lower speed due to aliasing, which will make identification of which target indication that belongs to which chirp signal more difficult. In order to be able do differentiate between the target indications in such a case, different power levels may be used for the first chirp signal and second chirp signal. As shown in Figure 4b, which corresponds to Figure 4a, the second target indication 6b has the first amplitude A₁ and the first target indication 6a' has a second amplitude A₂ which falls below the first amplitude A₁. The different power levels may vary from ramp to ramp or from frame to frame, a frame being constituted by a group of a number of chirp signals.

According to a second example of a radar system 3', again with reference to Figure 2, the sampling and timing signal 19 is used to produce an alternative control signal 20' for the phase modulator 15 after having its frequency reduced to, in this example, half of its original value in an alternative frequency divider 21', such that the control signal 20' for the phase modulator 15 has a frequency of about 5 MHz. Here, the object 6 will appear as target indications at the Nyquist frequency f_{N} and the Nyquist frequency f_{N} + 5 MHz. In this example, Doppler ambiguity and signal to noise ratio are improved, since by transmitting power via both transmitter antenna arrangements 10a, 10b for each chirp signal ramp, twice as much power is effectively transmitted during a certain measurement period compared to if simultaneous transmission had not been possible. This has the effect of doubling the received Signal-to-Noise ratio.

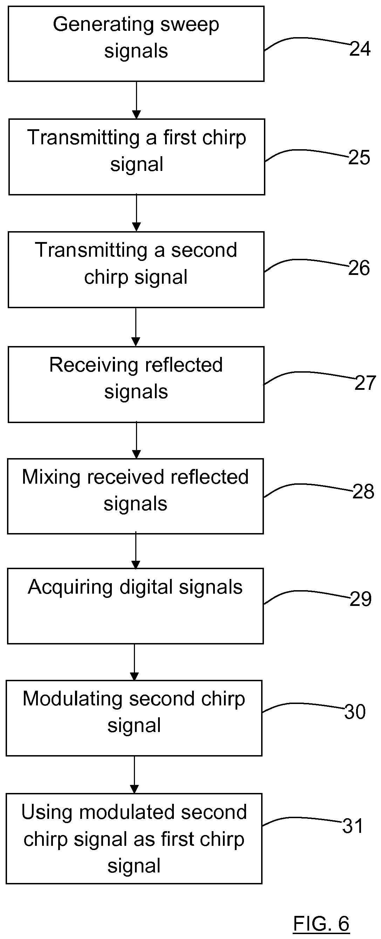

With reference to Figure 6, the present invention also relates to a method for a vehicle radar system, where the method comprises the steps:
24: generating sweep signals in the form of FMCW, Frequency Modulated Continuous Wave, chirp signals;
25: transmitting a first chirp signal 4a using a first transmitter antenna arrangement 10a;
26: transmitting a second chirp signal 4b using a second transmitter antenna arrangement 10b;
27: receiving reflected signals 5a, 5b;
28: mixing the received reflected signals 5a, 5b with at least one chirp signal 4b; and
29: converting the mixed received signals 14 to digital signals 20.

The method further comprises the step of:
30: modulating the second chirp signal 4b by applying a predetermined pattern of phase shifts and/or amplitude shifts to the second chirp signal 4b; and
31: using the modulated second chirp signal as the first chirp signal 4a.

The present invention is not limited to the examples above, but may vary freely within the scope of the appended claims. For example, all frequencies given in the examples are only for providing an enhanced understanding of the present invention, and are not to be regarded as limiting in any way. Any suitable frequencies and frequency bands may be used.

The radar system may be implemented in any type of vehicle such as cars, trucks and buses as well as boats and aircraft.

The schematics of vehicle radar systems are simplified, only showing parts that are considered relevant for an adequate description of the present invention. It is understood that the general design of radar systems of this kind is well-known in the art. For example, no devices that are arranged to use the acquired target information is shown, but many different such devices are of course conceivable; for example a warning and/or collision avoidance system.

The number of receiver antenna arrangements and IF signals may vary.

The ADC arrangement and the DSP arrangement should each one be interpreted as having a corresponding ADC or DSP functionality, and may each be constituted by a plurality of separate components. Alternatively, each ADC arrangement may be comprised in one ADC chip, and each DSP arrangement may be comprised in one DSP chip.

The phase shifts do not have to be 180°, but other values are conceivable, and the phase shifts do not have to be applied to every second ramp of the second chirp signal, but for example to every ramp, or every third ramp of the second chirp signal. Furthermore, the phase shifts could be pseudo-random from chirp signal ramp to chirp signal ramp.

Other kinds of frequency dividers with other frequency dividing properties, as well as other types of control signals are conceivable.

## Claims

1. A vehicle radar system (3, 3') comprising transmitting means (8) arranged for generating sweep signals in the form of FMCW, Frequency Modulated Continuous Wave, chirp signals, where a first transmitter antenna arrangement (10a) is arranged to transmit a first chirp signal (4a) and a second transmitter antenna arrangement (10b) is arranged to transmit a second chirp signal (4b), where the radar system (3, 3') further comprises receiving means (11), an Analog to Digital Converter, ADC, arrangement (16) and a Digital Signal Processor, DSP, arrangement (18), where the receiving means (11) is arranged to receive reflected signals (5a, 5b) and to mix the received reflected signals (5a, 5b) with at least one chirp signal (4b) and the ADC arrangement (16) is arranged to convert the mixed received signals (14) to digital signals (22), which digital signals (22) are arranged to be input into the DSP arrangement (18), **characterized in that** the radar system (3, 3') further comprises a signal modulator (15) arranged to modulate the second chirp signal (4b) by applying a phase shift to every ramp (r), every second ramp (r) or every third chirp ramp (r) of the second chirp signal (4b), or in a pseudo-random manner from chirp signal ramp (r) to chirp signal ramp (r) of the second chirp signal (4b), where the first chirp signal (4a) is constituted by the modulated second chirp signal.

2. A vehicle radar system (3, 3') according to claim 1, **characterized in that** the signal modulator (15) is arranged to modulate the second chirp signal (4b) by applying a phase shift of 180° to every second chirp ramp (r) of the second chirp signal (4b).

3. A vehicle radar system (3, 3') according to any one of the preceding claims, **characterized in that** the radar system (3, 3') comprises a sampling and timing arrangement (17) arranged to produce a sampling and timing signal (19) with a sampling frequency (fₛ), where the ADC arrangement (16) is arranged to convert the mixed received signals (14) to digital signals (22) by means of sampling the mixed received signals (14).

4. A vehicle radar system (3, 3') according to claim 3, **characterized in that** the signal modulator (15) is controlled by means of a control signal (20, 20') that is produced from the sampling and timing signal (19).

5. A vehicle radar system (3, 3') according to claim 4, **characterized in that** the control signal (20, 20') is in the form of a binary signal that is fed into the signal modulator (15) and acts by digitally switching the signal modulator (15) between phase shifts.

6. A vehicle radar system (3, 3') according to any one of the previous claims, **characterized in that** the DSP arrangement (18) is adapted for radar signal processing by means of a first FFT, Fast Fourier Transform, to convert the digital signals (22) to a range domain, and a second FFT to combine the results from successive chirp signal ramps into the Doppler domain.

7. A vehicle radar system (3, 3') according to any one of the previous claims, **characterized in that** the first chirp signal and second chirp signal have different power levels.

8. A vehicle radar system (3, 3') according to claim 7, **characterized in that** the different power levels of the chirp signals vary from ramp (r) to ramp (r) or from frame to frame, each frame being constituted by a group of a number of chirp signals.

9. A method for a vehicle radar system (3, 3'), the method comprising the steps:
(24) generating sweep signals in the form of FMCW, Frequency Modulated Continuous Wave, chirp signals,
(25) transmitting a first chirp signal (4a) using a first transmitter antenna arrangement (10a);
(26) transmitting a second chirp signal using a second transmitter antenna arrangement (10b);
(27) receiving reflected signals (5a, 5b);
(28) mixing the received reflected signals (5a, 5b) with at least one chirp signal (4b); and
(29) converting the mixed received signals (14) to digital signals (22),
**characterized in that** the method further comprises the steps of:
(30) modulating the second chirp signal (4b) by applying a phase shift to every ramp (r), every second ramp (r) or every third chirp ramp (r) of the second chirp signal (4b), or in a pseudo-random manner from chirp signal ramp (r) to chirp signal ramp (r) of the second chirp signal; and
(31) using the modulated second chirp signal (4b) as the first chirp signal (4a).

10. A method for a vehicle radar system (3, 3') according to claim 9, **characterized in that** the method further comprises modulating the second chirp signal (4b) by applying a phase shift of 180° to every second chirp ramp (r) of the second chirp signal (4b).

11. A method for a vehicle radar system (3, 3') according to any one of the claims 9 or 10, **characterized in that** the method further comprises controlling the signal modulator (15) by using a control signal (20, 20').

12. A method for a vehicle radar system (3, 3') according to any one of the claims 9-11, **characterized in that** the method further comprises converting the digital signals to a range domain and combining the results from successive chirp signals into the Doppler domain.

## Patentansprüche

1. Fahrzeugradarsystem (3, 3') mit einem Sendemittel (8), das zum Erzeugen von Sweep-Signalen in Form von frequenzmodulierten Dauerstrich(FMCW)-Chirp-Signalen vorgesehen ist, wobei eine erste Senderantennenanordnung (10a) so vorgesehen ist, dass sie ein erstes Chirp-Signal (4a) sendet, und eine zweite Senderantennenanordnung (10b) so vorgesehen ist, dass sie ein zweites Chirp-Signal (4b) sendet, wobei das Radarsystem (3, 3') ferner ein Empfangsmittel (11), eine Analog-Digital-Wandler(ADW)-Anordnung (16) und eine Digitalsignalprozessor(DSP)-Anordnung (18) umfasst, wobei das Empfangsmittel (11) so vorgesehen ist, dass es reflektierte Signale (5a, 5b) empfängt und die empfangenen reflektierten Signale (5a, 5b) mit mindestens einem Chirp-Signal (4b) mischt, und die ADW-Anordnung (16) so vorgesehen ist, dass sie die gemischten empfangenen Signale (14) in digitale Signale (22) umsetzt, wobei die digitalen Signale (22) so vorgesehen sind, dass sie in die DSP-Anordnung (18) eingegeben werden, **dadurch gekennzeichnet, dass** das Radarsystem (3, 3') ferner einen Signalmodulator (15) umfasst, der so vorgesehen ist, dass er das zweite Chirp-Signal (4b) durch Belegen jeder Rampe (r), jeder zweiten Rampe (r) oder jeder dritten Chirp-Rampe (r) des zweiten Chirp-Signals (4b) mit einer Phasenverschiebung oder pseudozufällig von Chirp-Signalrampe (r) zu Chirp-Signalrampe (r) des zweiten Chirp-Signals (4b) moduliert, wobei das erste Chirp-Signal (4a) von dem modulierten zweiten Chirp-Signal gebildet wird.

2. Fahrzeugradarsystem (3, 3') nach Anspruch 1, **dadurch gekennzeichnet, dass** der Signalmodulator (15) so vorgesehen ist, dass er das zweite Chirp-Signal (4b) durch Belegen jeder zweiten Chirp-Rampe (r) des zweiten Chirp-Signals (4b) mit einer Phasenverschiebung von 180° moduliert.

3. Fahrzeugradarsystem (3, 3') nach einem der vorhergehenden Ansprüche, **dadurch gekennzeichnet, dass** das Radarsystem (3, 3') eine Abtast- und Zeitsteuerungsanordnung (17) umfasst, die so vorgesehen ist, dass sie ein Abtast- und Zeitsteuerungssignal (19) mit einer Abtastfrequenz (fₛ) erzeugt, wobei die ADW-Anordnung (16) so vorgesehen ist, dass sie die gemischten empfangenen Signale (14) mittels Abtasten der gemischten empfangenen Signale (14) in digitale Signale (22) umsetzt.

4. Fahrzeugradarsystem (3, 3') nach Anspruch 3, **dadurch gekennzeichnet, dass** der Signalmodulator (15) mit einem Steuersignal (20, 20') gesteuert wird, das aus dem Abtast- und Zeitsteuerungssignal (19) erzeugt wird.

5. Fahrzeugradarsystem (3, 3') nach Anspruch 4, **dadurch gekennzeichnet, dass** das Steuersignal (20, 20') in Form eines Binärsignals vorliegt, das in den Signalmodulator (15) eingespeist wird und durch digitales Umschalten des Signalmodulators (15) zwischen Phasenverschiebungen wirkt.

6. Fahrzeugradarsystem (3, 3') nach einem der vorhergehenden Ansprüche, **dadurch gekennzeichnet, dass** die DSP-Anordnung (18) für eine Radarsignalverarbeitung mit einer ersten schnellen Fourier-Transformation (Fast Fourier Transform, FFT) zum Umwandeln der digitalen Signale (22) in eine Entfernungsrichtungsdomäne und einer zweiten FFT zum Kombinieren der Ergebnisse von aufeinanderfolgenden Chirp-Signalrampen in die Doppler-Domäne ausgelegt ist.

7. Fahrzeugradarsystem (3, 3') nach einem der vorhergehenden Ansprüche, **dadurch gekennzeichnet, dass** das erste Chirp-Signal und das zweite Chirp-Signal unterschiedliche Leistungspegel aufweisen.

8. Fahrzeugradarsystem (3, 3') nach Anspruch 7, **dadurch gekennzeichnet, dass** die unterschiedlichen Leistungspegel der Chirp-Signale von Rampe (r) zu Rampe (r) oder von Frame zu Frame variieren, wobei jeder Frame von einer Gruppe mehrerer Chirp-Signale gebildet wird.

9. Verfahren für ein Fahrzeugradarsystem (3, 3'), wobei das Verfahren folgende Schritte umfasst:
(24) Erzeugen von Sweep-Signalen in Form von frequenzmodulierten Dauerstrich(FMCW)-Chirp-Signalen,
(25) Senden eines ersten Chirp-Signals (4a) unter Verwendung einer ersten Senderantennenanordnung (10a);
(26) Senden eines zweiten Chirp-Signals unter Verwendung einer zweiten Senderantennenanordnung (10b);
(27) Empfangen reflektierter Signale (5a, 5b);
(28) Mischen der empfangenen reflektierten Signale (5a, 5b) mit mindestens einem Chirp-Signal (4b); und
(29) Umsetzen der gemischten empfangenen Signale (14) in digitale Signale (22),
**dadurch gekennzeichnet, dass** das Verfahren ferner folgende Schritte umfasst:
(30) Modulieren des zweiten Chirp-Signals (4b) durch Belegen jeder Rampe (r), jeder zweiten Rampe (r) oder jeder dritten Chirp-Rampe (r) des zweiten Chirp-Signals (4b) mit einer Phasenverschiebung oder pseudozufällig von Chirp-Signalrampe (r) zu Chirp-Signalrampe (r) des zweiten Chirp-Signals (4b); und
(31) Verwenden des modulierten zweiten Chirp-Signals (4b) als das erste Chirp-Signal (4a).

10. Verfahren für ein Fahrzeugradarsystem (3, 3') nach Anspruch 9, **dadurch gekennzeichnet, dass** das Verfahren ferner ein Modulieren des zweiten Chirp-Signals (4b) durch Belegen jeder zweiten Chirp-Rampe (r) des zweiten Chirp-Signals (4b) mit einer Phasenverschiebung von 180 ° umfasst.

11. Verfahren für ein Fahrzeugradarsystem (3, 3') nach Anspruch 9 oder 10, **dadurch gekennzeichnet, dass** das Verfahren ferner ein Steuern des Signalmodulators (15) unter Verwendung eines Steuersignals (20, 20') umfasst.

12. Verfahren für ein Fahrzeugradarsystem (3, 3') nach einem der Ansprüche 9 bis 11, **dadurch gekennzeichnet, dass** das Verfahren ferner ein Umwandeln der digitalen Signale in eine Entfernungsrichtungsdomäne und ein Kombinieren der Ergebnisse von aufeinanderfolgenden Chirp-Signalen in die Doppler-Domäne umfasst.

## Revendications

1. Système radar de véhicule (3, 3') comprenant un moyen d'émission (8) conçu pour générer des signaux de balayage sous la forme de signaux chirp d'onde continue à fréquence modulée, FMCW (Frequency Modulated Continuous Wave), un premier agencement d'antenne d'émetteur (10a) étant conçu pour émettre un premier signal chirp (4a) et un second agencement d'antenne d'émetteur (10b) étant conçu pour émettre un second signal chirp (4b), le système radar (3, 3') comprenant en outre un moyen de réception (11), un agencement de convertisseur analogique-numérique, ADC (Analog to Digital Converter), (16) et un agencement de processeur de signal numérique, DSP (Digital Signal Processor), (18), le moyen de réception (11) étant conçu pour recevoir des signaux réfléchis (5a, 5b) et pour mélanger les signaux réfléchis (5a, 5b) reçus avec au moins un signal chirp (4b) et l'agencement d'ADC (16) étant conçu pour convertir les signaux reçus mélangés (14) en des signaux numériques (22), lesdits signaux numériques (22) étant conçus pour être entrés dans l'agencement de DSP (18), **caractérisé en ce que** le système radar (3, 3') comprend en outre un modulateur de signaux (15) conçu pour moduler le second signal chirp (4b) en appliquant un déplacement de phase à chaque rampe (r), à une rampe (r) sur deux ou à une rampe de chirp (r) sur trois du second signal chirp (4b), ou de manière pseudo-aléatoire d'une rampe de signal chirp (r) à l'autre du second signal chirp (4b), le premier signal chirp (4a) étant constitué par le second signal chirp modulé.

2. Système radar de véhicule (3, 3') selon la revendication 1, **caractérisé en ce que** le modulateur de signaux (15) est conçu pour moduler le second signal chirp (4b) en appliquant un déplacement de phase de 180° à une rampe de chirp (r) sur deux du second signal chirp (4b).

3. Système radar de véhicule (3, 3') selon l'une quelconque des revendications précédentes, **caractérisé en ce que** le système radar (3, 3') comprend un agencement d'échantillonnage et de commande temporelle (17) conçu pour générer un signal d'échantillonnage et de commande temporelle (19) avec une fréquence d'échantillonnage (fₛ), l'agencement d'ADC (16) étant conçu pour convertir les signaux reçus mélangés (14) en signaux numériques (22) au moyen de l'échantillonnage des signaux reçus mélangés (14).

4. Système radar de véhicule (3, 3') selon la revendication 3, **caractérisé en ce que** le modulateur de signaux (15) est commandé au moyen d'un signal de commande (20, 20') qui est généré à partir du signal d'échantillonnage et de commande temporelle (19).

5. Système radar de véhicule (3, 3') selon la revendication 4, **caractérisé en ce que** le signal de commande (20, 20') se présente sous la forme d'un signal binaire qui est transmis au modulateur de signaux (15) et agit par commutation numérique du modulateur de signaux (15) entre des déplacements de phase.

6. Système radar de véhicule (3, 3') selon l'une quelconque des revendications précédentes, **caractérisé en ce que** l'agencement de DSP (18) est adapté pour le traitement de signaux radar au moyen d'une première transformation de Fourier rapide, FFT (Fast Fourier Transform), pour convertir les signaux numériques (22) dans un domaine de portée, et une seconde FFT pour combiner les résultats provenant de rampes successives de signal chirp dans le domaine Doppler.

7. Système radar de véhicule (3, 3') selon l'une quelconque des revendications précédentes, **caractérisé en ce que** le premier signal chirp et le second signal chirp présentent différents niveaux de puissance.

8. Système radar de véhicule (3, 3') selon la revendication 7, **caractérisé en ce que** les différents niveaux de puissance des signaux chirp varient d'une rampe (r) à l'autre ou d'une trame à l'autre, chaque trame étant constituée par un groupe de plusieurs signaux chirp.

9. Procédé pour un système radar de véhicule (3, 3'), le procédé comprenant les étapes consistant à :
(24) générer des signaux de balayage sous la forme de signaux chirp d'onde continue à fréquence modulée, FMCW (Frequency Modulated Continuous Wave),
(25) émettre un premier signal chirp (4a) au moyen d'un premier agencement d'antenne d'émetteur (10a) ;
(26) émettre un second signal chirp au moyen d'un second agencement d'antenne d'émetteur (10b) ;
(27) recevoir des signaux réfléchis (5a, 5b) ;
(28) mélanger les signaux réfléchis (5a, 5b) reçus avec au moins un signal chirp (4b) ; et
(29) convertir les signaux reçus mélangés (14) en signaux numériques (22),
**caractérisé en ce que** le procédé comprend en outre les étapes consistant à :
(30) moduler le second signal chirp (4b) en appliquant un déplacement de phase à chaque rampe (r), à une rampe (r) sur deux ou à une rampe (r) sur trois du second signal chirp (4b), ou de manière pseudo-aléatoire d'une rampe (r) de signal chirp à l'autre du second signal chirp ; et
(31) utiliser le second signal chirp (4b) modulé en guise de premier signal chirp (4a).

10. Procédé pour un système radar de véhicule (3, 3') selon la revendication 9, **caractérisé en ce que** le procédé comprend en outre la modulation du second signal chirp (4b) en appliquant un déplacement de phase de 180° à une rampe de chirp (r) sur deux du second signal chirp (4b).

11. Procédé pour un système radar de véhicule (3, 3') selon l'une quelconque des revendications 9 ou 10, **caractérisé en ce que** le procédé comprend en outre la commande du modulateur de signaux (15) au moyen d'un signal de commande (20, 20').

12. Procédé pour un système radar de véhicule (3, 3') selon l'une quelconque des revendications 9 à 11, **caractérisé en ce que** le procédé comprend en outre la conversion des signaux numériques dans un domaine de portée et la combinaison des résultats provenant de signaux chirp successifs dans le domaine Doppler.
